# EUROPÄISCHE PATENTSCHRIFT

(11) **EP 3 019 730 B1**
(45) Veröffentlichungstag und Bekanntmachung des Hinweises auf die Patenterteilung: **15.10.2025**
(21) Anmeldenummer: 14726126.7
(22) Anmeldetag: 20.05.2014
(51) Int. Cl.: F02D 41/08, F02D 41/16, F02D 13/02, F02D 31/00, F02D 41/00, F02B 3/06

(54) **VERFAHREN ZUM BETRIEB EINER SELBSTZÜNDENDEN BRENNKRAFTMASCHINE UND BRENNKRAFTMASCHINE MIT SELBSTZÜNDUNG**
METHOD FOR OPERATING A COMPRESSION-IGNITION INTERNAL COMBUSTION ENGINE AND INTERNAL COMBUSTION ENGINE WITH COMPRESSION IGNITION
PROCÉDÉ POUR FAIRE FONCTIONNER UN MOTEUR À COMBUSTION INTERNE À AUTOALLUMAGE ET MOTEUR À COMBUSTION INTERNE À AUTOALLUMAGE

(30) Priorität: 08.07.2013 DE 102013213333
(43) Veröffentlichungstag der Anmeldung: 18.05.2016
(73) Patentinhaber: Volkswagen Aktiengesellschaft, 38440 Wolfsburg (DE)
(72) Erfinder: BIENER, Martin, 38173 Veltheim/Ohe (DE); GÜNTHER, Johanna, 38448 Wolfsburg (DE); SCHULZ, Michael, 38518 Gifhorn (DE)
(86) Internationale Anmeldenummer: PCT/EP2014/060287
(87) Internationale Veröffentlichungsnummer: WO 2015/003840

(56) Entgegenhaltungen:
- WO-A1-2007/129168
- DE-A1- 19 825 729
- US-A1- 2006 011 166
- US-A1- 2011 073 069

## Beschreibung

Die Erfindung betrifft ein Verfahren zum Betrieb einer selbstzündenden Brennkraftmaschine mit den Merkmalen gemäß dem Oberbegriff des Anspruchs 1.

Die Erfindung betrifft weiterhin eine Brennkraftmaschine mit Selbstzündung, umfassend ein Steuergerät, mit den Merkmalen gemäß dem Oberbegriff des Anspruchs 6.

Eine selbstzündende Brennkraftmaschine ist beispielsweise aus der Druckschrift DE 67207 A bekannt. Diese beschreibt ein Arbeitsverfahren für Brennkraftmaschinen, bei dem in einem Zylinder von einem Arbeitskolben reine Luft oder anderes indifferentes Gas mit reiner Luft so stark verdichtet wird, dass die hierdurch entstandene Temperatur weit über der Entzündungstemperatur des zu benutzenden Brennstoffes liegt, worauf die Brennstoffzufuhr vom toten Punkt ab so allmählich stattfindet, dass die Verbrennung wegen des ausschiebenden Kolbens und der dadurch bewirkten Expansion der verdichteten Luft beziehungsweise des Gases ohne wesentliche Druck- und Temperaturerhöhung erfolgt, worauf nach Abschluss der Brennstoffzufuhr die weitere Expansion der im Arbeitszylinder befindlichen Gasmasse stattfindet. Eine nach einem derartigen Prinzip arbeitende Brennkraftmaschine wird auch Dieselmotor genannt.

Weit verbreitet gelangen derartige Brennkraftmaschinen in Kraftfahrzeugen zum Erzeugen eines Antriebsmoments zum Einsatz.

Aus der Druckschrift DE 32 31 766 A1 ist eine Einrichtung zum Regeln der Leerlaufdrehzahl bei einer Brennkraftmaschine mit Fremdzündung bekannt. Diese Einrichtung dient dazu, das Verbrennungsluftverhältnis an das Verhalten der Brennkraftmaschine im Leerlauf anzupassen. Ziel ist es, die bei einem ungünstigen Verbrennungsluftverhältnis, insbesondere bei einer signifikanten Abweichung des Verbrennungsluftverhältnisses von 1 auftretenden Zündausfälle zu vermeiden. Wird die Brenngrenze in einem Zylinder erreicht, kann das Gemisch von Brennstoff und Frischluft nicht zünden und der Arbeitstakt fällt aus. Diese Störung in dem Arbeitsprozess der Brennkraftmaschine wird in dieser Druckschrift als mangelnde Laufruhe bezeichnet. Als Lösung werden hier Regelungsmaßnahmen für das Verbrennungsluftverhältnis vorgeschlagen, die außerhalb des Brennraums erfolgen. Eine vergleichbare Leerlaufregelung für einen Dieselmotor würde den Regelkreis der Kraftstoffeinspritzung betreffen, also die Menge des einzuspritzenden Kraftstoffs an das Verhalten der Brennkraftmaschine im Leerlauf anpassen.

In der Druckschrift DE 103 60 834 A1 ist ein Verfahren zur Regelung des Leerlaufzustandes, also zu der Einhaltung einer erforderlichen Drehzahl, beschrieben. Hierbei ist zur Verbesserung der Zumessung beziehungsweise Steuerung von Kraftstoff und seiner Einspritzung eine besondere Verarbeitung von Signalen im Steuergerät vorgesehen. Bei der Leerlaufregelung soll hierbei insbesondere das Zündsystem beeinflusst werden. Bei einer Brennkraftmaschine mit Fremdzündung und Direkteinspritzung kann im Homogenbetrieb, also bei einem Verbrennungsluftverhältnis von 1, die Zufuhr der Frischluft über eine Ansteuerung einer Drosselklappe oder über eine voll variable Ventilsteuerung erfolgen. Bei einem Schichtbetrieb, also bei einem signifikant von Lambda gleich 1 abweichenden Verbrennungsluftverhältnis, wird die Brennkraftmaschine ungedrosselt, also ohne eine Begrenzung der zugeführten Frischluftmenge, betrieben. Das Drehmoment wird dabei über die zugemessene Kraftstoffmenge bestimmt. Beim Leerlauf ist die Abgabe eines Antriebsdrehmomentes nicht erforderlich, sodass lediglich das innere Drehmoment der Brennkraftmaschine erzeugt werden muss.

Eine variable Ventilsteuerung ist auch aus der Druckschrift US 5,417,186 A bekannt. Diese zeigt fest mit der Nockenwelle verbundene Nocken, in denen jeweils variabel gegenüber der Nockenwelle verstellbare Nockenelemente angeordnet sind.

Ein Dieselmotor wird im Leerlauf und allen anderen Betriebsbereichen mit einem hohen Luftüberschuss betrieben. Dadurch benötigt der Dieselmotor für den Normalbetrieb im Gegensatz zu beispielsweise einem Ottomotor keine Drosselklappe. Dies ist auch einer der Gründe für den Verbrauchsvorteil eines Dieselmotors. Bei einem Ottomotor ist eine Drosselklappe zwingend erforderlich, da dieser fast immer in einem Homogenbetrieb mit einem Verbrennungsluftverhältnis von 1 betrieben werden muss. Das Verbrennungsluftverhältnis wird auch als Lambda oder als Luftzahl bezeichnet.

Durch den Betrieb ohne Drosselklappe und den hohen Luftüberschuss ist der Leerlauf eines Dieselmotors immer von einer hohen Ungleichförmigkeit geprägt. Dies bedeutet, dass sich die Umdrehungsgeschwindigkeit der Kurbelwelle während einer Umdrehung stark ändert. Die Kurbelwelle wird während eines Verdichtungstaktes verzögert und während des Arbeitstaktes beschleunigt. Die Umdrehungsgeschwindigkeit wird in der Regel als Drehzahl ausgedrückt. Als Beispiel für einen typischen 4-Zylinder-Dieselmotor eines Personenkraftwagens beträgt die mittlere Drehzahl ungefähr 830 U/min, die maximale Drehzahl jedoch 930 U/min und die minimale Drehzahl 720 U/min.

Dies führt zu starken mechanischen Schwingungen in der Brennkraftmaschine und entsprechenden Anregungen der Karosserie. Zudem werden auch die Bauteile der Brennkraftmaschine durch diese Drehschwingung mit angeregt. Aus diesem zweimaligen Beschleunigen und Abbremsen bei jeder Umdrehung können akustische Auffälligkeiten entstehen und möglicherweise kann sogar die Standzeit der Bauteile reduziert werden.

Um die Amplituden der Schwingungen zu reduzieren, ist es bekannt, die Zufuhr der Frischluft zum Motor zu drosseln. Hierzu werden wie oben erwähnt beispielsweise bei Ottomotoren Drosselklappen in der Luftzuführung eingesetzt. Eine Einschränkung des Frischluftvolumenstroms mittels einer Drosselklappe führt bei einem Dieselmotor jedoch zu steigenden Saugverlusten und damit zu einem um bis zu 20 Prozent gesteigerten Verbrauch gegenüber dem Verzicht auf eine Drosselklappe. Mit dem Verbrauch steigen auch die Emissionen, insbesondere von unverbrannten Kohlenwasserstoffen, deutlich an.

Ein Verbrennungsmotor ist eine Brennkraftmaschine, die chemische Energie eines Kraftstoffes durch Verbrennung in mechanische Arbeit umwandelt. Die Verbrennung findet dabei in wenigstens einem Brennraum, insbesondere in einem Zylinder, statt. Im Brennraum wird ein Gemisch aus Kraftstoff und Umgebungsluft gezündet. Brennkraftmaschinen arbeiten in der Regel mit vier Prozessschritten, welche auch Takte genannt werden. Diese sind der Ansaugtakt, der Verdichtungstakt, der Arbeitstakt und der Ausstoßtakt. Diese Abfolge von Takten wird auch als Arbeitsspiel bezeichnet.

Bei so genannten Kolbenmaschinen wird die Wärmeausdehnung des durch die Verbrennung heißen Gases genutzt, um einen Kolben in einem Zylinder auf und ab zu bewegen. Das Arbeitsspiel bei Kolbenmaschinen verläuft wie folgt: Der Ansaugtakt endet, wenn der Kolben in einem unteren Totpunkt am weitesten von dem Einlassventil beziehungsweise dem Auslassventil entfernt positioniert ist und somit der Brennraum das größte Volumen aufweist. Diese Position des Kolbens stellt zugleich den Beginn des Verdichtungstaktes dar. Erreicht der Kolben seinen oberen Totpunkt, also die größte Annäherung an zumindest das Einlassventil, so weist der Brennraum das kleinste Volumen auf. Diese Position des Kolbens markiert zugleich das Ende des Verdichtungstaktes und den Beginn des Arbeitstaktes. Erreicht der Kolben erneut den unteren Totpunkt, endet der Arbeitstakt und der Ausstoßtakt beginnt. Der Ausstoßtakt wird beendet und ein neuer Ansaugtakt begonnen, wenn der Kolben erneut den oberen Totpunkt seiner Bewegung erreicht.

Leerlauf bezeichnet den Betrieb einer Brennkraftmaschine, in welchem das Verhältnis von abgegebenem Moment, insbesondere zum Vortrieb eines Kraftfahrzeugs genutzten Moments, zum inneren Moment im Wesentlichen Null, bevorzugt genau Null ist. In Konsequenz verrichtet die Brennkraftmaschine nicht die Arbeit , für die sie vorgesehen ist. Brennkraftmaschinen kommen unter einer minimalen Drehzahl der Kurbelwelle zum Stillstand. Diese Drehzahl liegt bei den meisten Motoren von Kraftfahrzeugen zwischen 700 und 900 Umdrehungen pro Minute. Damit der Motor die Drehzahl hält, wird ihm im Leerlauf eine geringe Menge Kraftstoff zugeführt. Meist wird die Leerlaufdrehzahl etwas höher als unbedingt notwendig eingestellt, damit geringere Vibrationen auftreten und ein plötzlicher Wechsel in den Lastbetrieb nicht zum Ausgehen des Motors führt.

In der Schrift DE 198 25 729 A1 werden Verfahren zur Leerlaufregelung bei einer Kolbenbrennkraftmaschine mit voll variabel ansteuerbaren Gaswechselventilen offenbart. Ein erstes Verfahren "Spätes-Einlass-Schließen" besteht darin, bei einem Leerlauf der Brennkraftmaschine von einer kurbelwinkelbasierten Ansteuerung des Schließzeitpunkts der Einlassventile auf eine zeitbasierte Ansteuerung zu wechseln. Dadurch wird bei einem Drehzahlabfall der Brennkraftmaschine das Einlassventil ohne weiteres Zutun in Bezug auf das Kurbelwinkelsystem früher geschlossen, wodurch die Füllung und die Drehzahl wieder erhöht werden. Bei einem weiteren Verfahren "Frühes-Einlass-Schließen" mit einem Schließzeitpunkt der Einlassventile vor einem unteren Totpunkt wird bei einem Drehzahlabfall die Öffnungszeit der Einlassventile verlängert, so dass wiederum die Füllung und die Drehzahl erhöht werden.

Der Erfindung liegt daher die Aufgabe zugrunde, bei weitestgehend unverändertem Kraftstoffverbrauch die Schwingungen einer selbstzündenden Brennkraftmaschine im Leerlauf zu reduzieren.

Die Aufgabe wird gelöst mit einem Verfahren gemäß den Merkmalen des unabhängigen Anspruchs 1. Die Merkmale der abhängigen Ansprüche betreffen weitere Ausgestaltungen der Erfindung.

Das erfindungsgemäße Verfahren zum Betrieb einer selbstzündenden Brennkraftmaschine mit wenigstens einem Brennraum, der wenigstens ein Einlassventil aufweist, umfasst wenigstens die folgenden Schritte: Die selbstzündende Brennkraftmaschine wird in einem Lastbetriebszustand, in welchem das wenigstens eine Einlassventil zu einem ersten Schließzeitpunkt innerhalb eines ersten Arbeitsspiels geschlossen wird, betrieben. Die selbstzündende Brennkraftmaschine wird anschließend in einem Leerlauf betrieben. Das wenigstens eine Einlassventil wird im Leerlauf zu einem zweiten Schließzeitpunkt innerhalb eines zweiten Arbeitsspiels geschlossen, welcher später innerhalb des zweiten Arbeitsspiels als der erste Schließzeitpunkt innerhalb des ersten Arbeitsspiels liegt, indem der zweite Schließzeitpunkt innerhalb des zweiten Arbeitsspiels im Vergleich zu dem ersten Schließzeitpunkt innerhalb des ersten Arbeitsspiels um einen Drehwinkel der Kurbelwelle nach spät verschoben ist. Insbesondere kann der Zeitpunkt des Schließens des wenigstens einen Einlassventils im Leerlauf verschoben werden.

Die Begriffe Leerlauf und Arbeitsspiel sind definiert wie weiter oben ausführlich beschrieben.

Das erfindungsgemäße Verfahren gelangt in einer Kolbenmaschine zum Einsatz. Das heißt, der Brennraum ist ein Zylinder. Die selbstzündende Brennkraftmaschine weist eine Kurbelwelle und den mindestens einen Zylinder, in dem ein Kolben auf und ab bewegt wird, auf, so dass innerhalb eines Arbeitsspieles von 720 Grad Kurbelwellenumdrehung nacheinander ein Ansaugtakt, ein Verdichtungstakt, ein Arbeitstakt und ein Ausstoßtakt ausgeführt werden, und dem mindestens ein Einlassventil und mindestens ein Auslassventil zugeordnet sind, aufweisen.

Mit anderen Worten ist im erfindungsgemäßen Verfahren zum Betrieb einer selbstzündenden Brennkraftmaschine vorgesehen, dass während des Leerlaufes der Brennkraftmaschine der Zeitpunkt des Schließens des Einlassventils nach spät verschoben ist beziehungsweise wird. Das Schließen eines Einlassventils erfolgt erfindungsgemäß somit später als in einem regulären Betriebszustand der Brennkraftmaschinebeziehungsweise in einem Lastbetriebszustand. Da es sich bei der Brennkraftmaschine um eine Kolbenmaschine handelt, kann bereits in einem regulären Betriebszustand der Brennkraftmaschine das Einlassventil später im Arbeitsspiel geschlossen werden, als der Kolben den unteren Totpunkt erreicht.

Anders gesagt, es ist erfindungsgemäß vorgesehen, dass im Leerlauf der selbstzündenden Brennkraftmaschine das Schließen wenigstens eines Einlassventils später erfolgt als im vom Leerlauf verschiedenen Betrieb beziehungsweise im Lastbetrieb.

Da es in erfindungsgemäßer Weise ermöglicht ist, den Kraftstoffverbrauch zu reduzieren, sinken in vorteilhafter Weise auch die Emissionen der selbstzündenden Brennkraftmaschine. Gleichzeitig kann der Leerlaufkomfort verbessert werden.

Durch das erst im Verdichtungstakt schließende Einlassventil, also während sich der Kolben auf das Einlassventil zu bewegt, wird erreicht, dass ein Teil der angesaugten Frischluft wieder aus dem Zylinder gedrückt wird. Durch diese Absenkung der Füllung des Brennraumes wird der Leerlaufkomfort erhöht, da beispielsweise wegen des im Verdichtungstakt geöffneten Einlassventils der Widerstand für den Kolben geringer ist. Dabei ist beispielsweise während des Leerlaufes der Brennkraftmaschine die Öffnungsdauer des Einlassventils im Verdichtungstakt länger als bei einem vom Leerlauf verschiedenen Betriebszustand der Brennkraftmaschine, wobei der Zeitpunkt des Schließens des Einlassventils nach spät verschoben wird.

Bleibt die Menge des für den Leerlauf erforderlichen eingespritzten Kraftstoffes unverändert, so wird durch das spätere Schließen des Einlassventils die Menge an zugeführter Frischluft reduziert, so dass sich das Verbrennungsluftverhältnis verringert. Dies hat weitere vorteilhafte Auswirkungen auf den Leerlaufkomfort. Da im Arbeitstakt weniger Frischluft für die Verbrennung zur Verfügung steht, ist die auf den Kolben wirkende Expansionskraft der Verbrennung geringer als bei einer vollständigen Füllung des Zylinders mit Frischluft.

Durch die beiden vorstehend genannten Effekte wird die Kurbelwelle während eines Verdichtungstaktes weniger abgebremst und während des Arbeitstaktes weniger stark beschleunigt. Dadurch ist die Abweichung der momentanen Drehzahl von der mittleren Drehzahl geringer, die Rotation der Kurbelwelle also gleichförmiger. Hierdurch werden die insbesondere akustischen Auffälligkeiten eines Dieselmotors im Leerlauf deutlich reduziert und der Leerlaufkomfort verbessert. Zugleich wird eine Reduzierung der Füllung des Zylinders erreicht, bei der der Verbrauch von Kraftstoff nicht ansteigt.

Gemäß der Erfindung ist es vorgesehen, dass das Schließen des Einlassventils während des Verdichtungstaktes des Arbeitsspiels und vor der Einspritzung des Kraftstoffes, insbesondere im besagten Verdichtungstakt, erfolgt. Hierdurch wird vermieden, dass Kraftstoff unverbrannt in die Saugleitung gelangt.

Eine Weiterbildung des erfindungsgemäßen Verfahrens ist es, dass das Öffnen eines Auslassventils der Brennkraftmaschine später erfolgt. Hierdurch wird erreicht, dass der Verbrennungsvorgang vollständig abgeschlossen wird und somit keine unverbrannten Kraftstoffe in den Abgasturbolader gelangen oder ausgestoßen werden. Darüber hinaus erfolgt durch das späte Öffnen des Auslassventils eine geringe Kompression der Verbrennungsgase, welche somit trotz der geringeren Füllmenge eine hohe Temperatur aufweisen. Dies ist besonders günstig, da so der Katalysator aktiv bleiben kann und der Abgasturbolader keinen oder nur einen geringen Abfall der Drehzahl erfährt. Die Kombination der Verstellung von Einlassventil und Auslassventil stellt sich dabei als eine besonders günstige Lösung zur Verringerung von Vibrationen und Schwingungen sowie akustischen Störgeräuschen bei gleichzeitig unverändert niedrigem Verbrauch, niedrigen Emissionen von Stickoxiden und nicht vollständig chemisch umgesetzten Kohlenwasserstoffen sowie ausreichend hohen Abgastemperaturen heraus.

Die Reduktion der Emissionen und von im Leerlauf eines Dieselmotors gegebenenfalls auftretenden Geruchsbelästigungen wird unter anderem dadurch erreicht, dass im Leerlauf der Brennkraftmaschine der Luftmassendurchsatz erfindungsgemäß reduziert ist, so dass die Komponenten der Abgasnachbehandlung, einschließlich Abgasturbolader und Katalysator, weniger stark abkühlen.

Als eine besonders günstige Ausführungsform der Erfindung hat es sich erwiesen, dass das Öffnen des Auslassventils und/oder das Schließen des Einlassventils um einen Drehwinkel einer Kurbelwelle der Brennkraftmaschine von 20° bis 60°, vorzugsweise um 50° nach spät verschoben wird. Diese Verschiebung erfolgt relativ zu dem in einem Lastbetriebszustand der Brennkraftmaschine üblichen Steuerzeitpunkt. Die verbrauchsneutrale Minderung der Vibrationen im Leerlauf eines warmen Dieselmotors wird durch diese Änderung der Steuerzeitpunkte der Ventile erreicht, ohne dass es zu einem negativen Einfluss auf die Anfahrdynamik oder eine Absenkung der Abgastemperatur kommt.

Eine Weiterbildung der Erfindung ist es, dass im Leerlauf der Brennkraftmaschine zusätzlich eine Drosselklappe der Brennkraftmaschine teilweise geschlossen wird. Hierdurch ist es möglich, eine weitere Füllungsabsenkung zu erreichen und zusätzlich eine deutliche Reduktion der Luftsäulenschwingungen in der Ansaugstrecke des Motors herbeizuführen. In Konsequenz beruhigen sich zum Beispiel die Signale des meist im Luftfilterkasten angeordneten Luftmassenmessers und vor allem die Emission des niederfrequenten Ansauggeräusches.

Die alleinige Anstellung einer Drosselklappe zur Absenkung der Füllung des Zylinders mit Frischluft im Leerlauf ist möglich und würde auch die genannten Auffälligkeiten des klassischen Diesel-Leerlaufes beseitigen. Jedoch wäre dies mit einem sehr starken Anstieg von Emissionen und Kraftstoffverbrauch sowie einer physikalisch bedingten Abnahme der Drehzahl des Abgasturboladers verbunden. Dennoch ist die Drosselklappe ein extrem schnelles Stellglied. In der Kombination mit der Ventilverstellung liegt hier der Vorteil, dass die Drosselklappe beim Anfahren eher geöffnet wird als die variablen Ventile. Dies verbessert den Abstellkomfort deutlich.

Die Frischluftmasse lässt sich um bis zu 50 Prozent verringern, ohne dass der Verbrauch an Kraftstoff signifikant ansteigt. Eine Kombination einzelner oder mehrerer der vorstehend genannten Merkmale mit einem oder mehreren der nachfolgenden Kennzeichen hat sich als günstig erwiesen: dass im Leerlauf ein Verbrennungsluftverhältnis von größer 2, vorzugsweise in einem Bereich zwischen 2 und 5, eingestellt wird; dass eine gegenüber einem vom Leerlauf verschiedenen Betriebszustand der Brennkraftmaschine unveränderte Menge Kraftstoff vor oder bei jedem Verdichtungstakt eingespritzt wird; dass die Abgasrückführrate gering ist oder die Abgasrückführung ausgesetzt wird; dass die Abgasrückführung im Niederdruckbereich erfolgt und/oder dass keine Voreinspritzung erfolgt. Durch die Kombination dieser Merkmale sinkt der Spitzendruck bei der Verdichtung um bis zu 33 Prozent, was auch zu einem verbesserten Abstellkomfort führt.

Im Zusammenhang des erfinderischen Gedankens steht auch eine Brennkraftmaschine mit Selbstzündung, welche ein Steuergerät umfasst. Das Steuergerät weist einen Speicher auf, in dem ein Steuerungsprogamm abgelegt ist, von welchem wenigstens ein Abschnitt beim Ausführen des Steuerungsprogramms, insbesondere in einem Rechner, den Leerlauf der Brennkraftmaschine steuert. Erfindungsgemäß ist das Steuerungsprogamm zur Anwendung des erfindungsgemäßen Verfahrens mit Merkmalen oder Merkmalskombinationen gemäß dieser Darstellung ausgeführt.

Gemäß einer Weiterbildung der Erfindung weist eine Ausführungsform der Brennkraftmaschine eine variable Ventilsteuerung auf. Eine variable Ventilsteuerung wird verbreitet auch als Variable Valve Timing oder VVT bezeichnet. Die Variabilität kann beispielsweise durch eine Mehrzahl von Nocken mit unterschiedlichen Nockenkurven für die Betätigung des oder der Einlass- beziehungsweise Auslassventile eines Brennraums realisiert sein, welche axial verschieblich auf einer Nockenwelle angeordnet sind.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine schematische Darstellung einer bevorzugten Ausführungsform einer erfindungsgemäßen selbstzündenden Brennkraftmaschine im Teilschnitt;
- Fig. 2: ein Ablaufschema einer Ausführungsform eines Verfahrens zum Betrieb einer bevorzugten Ausführungsform einer erfindungsgemäßen selbstzündenden Brennkraftmaschine.

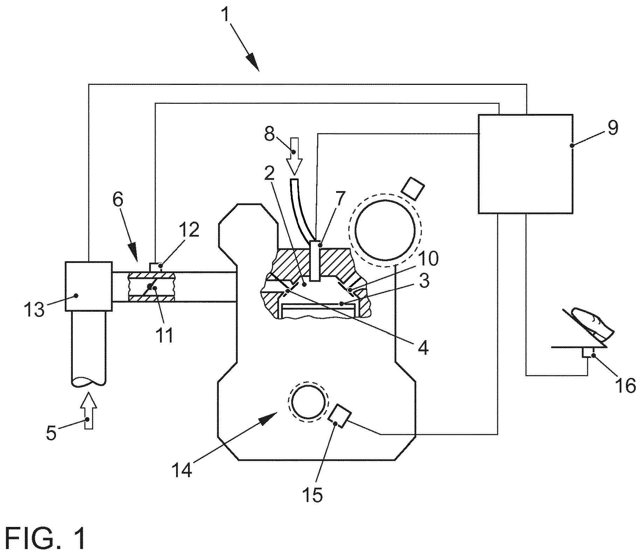

Figur 1 zeigt eine Ausführungsform einer erfindungsgemäßen Brennkraftmaschine 1 in vereinfachter Form im Teilschnitt dargestellt. Es handelt sich um eine Kolbenmaschine. Die Brennkraftmaschine 1 weist wenigstens einen Zylinder 2 als Brennraum auf, der von einem Kolben 3 beweglich abgedichtet wird. Der Zylinder 2 wird während des Ansaugtaktes 18 über ein Einlassventil 4 mit Frischluft 5 aus einem Ansaugrohr 6 gefüllt. Dabei bewegt sich der Kolben 3 von dem Einlassventil 4 weg. Schließlich wird das Einlassventil 4 geschlossen 20.

Dem Ansaugtakt 18 folgt der Verdichtungstakt 21, bei dem die in dem Zylinder 2 befindliche Frischluft 5 durch eine entgegengerichtete Bewegung des Kolbens 3 verdichtet wird. Zu der Frischluft 5 in dem Zylinder 2 wird über eine Einspritzdüse 7 eine passende Menge Kraftstoff 8 zugemessen. Die Einspritzdüse 7 öffnet durch den Druck der Frischluft 5 in dem Zylinder 2 und/oder durch eine elektrische Ansteuerung eines Steuergerätes 9. Durch die Verdichtung wird das Gemisch aus Kraftstoff 8 und Frischluft 5 in dem Zylinder 2 erwärmt, bis eine Selbstzündung 23 erfolgt. Im Arbeitstakt 24 wird durch die Verbrennung 25 des Kraftstoffes 8 in dem Zylinder 2 der Kolben 3 wieder von dem Einlassventil 4 weg bewegt. Nach der Verbrennung 25 werden die Verbrennungsgase über ein Auslassventil 10 aus dem Zylinder 2 durch die Bewegung des Kolbens 3 ausgestoßen. Anschließend wird der Zylinder 2 wieder mit Frischluft 5 über das Einlassventil 4 gefüllt. In dem Ansaugrohr 6 ist eine Drosselklappe 11 vorgesehen. Von einem mit dem Steuergerät 9 verbundenen Drosselklappensteller 12 wird die Winkelstellung der Drosselklappe 11 verstellt. Die Brennkraftmaschine 1 weist weiterhin einen Luftmassenmesser 13 auf, der die Masse der über das Ansaugrohr 6 zum Zylinder 2 strömenden Frischluft 5 erfasst. Die Winkelstellung der Kurbelwelle 14 wird von einem Sensor 15 erfasst und an das Steuergerät 9 übertragen. Weiter ist mit dem Steuergerät 9 ein Fahrerwunschgeber 16 verbunden, über den der Fahrer seine Drehmomentanforderung an das Steuergerät 9 übermittelt.

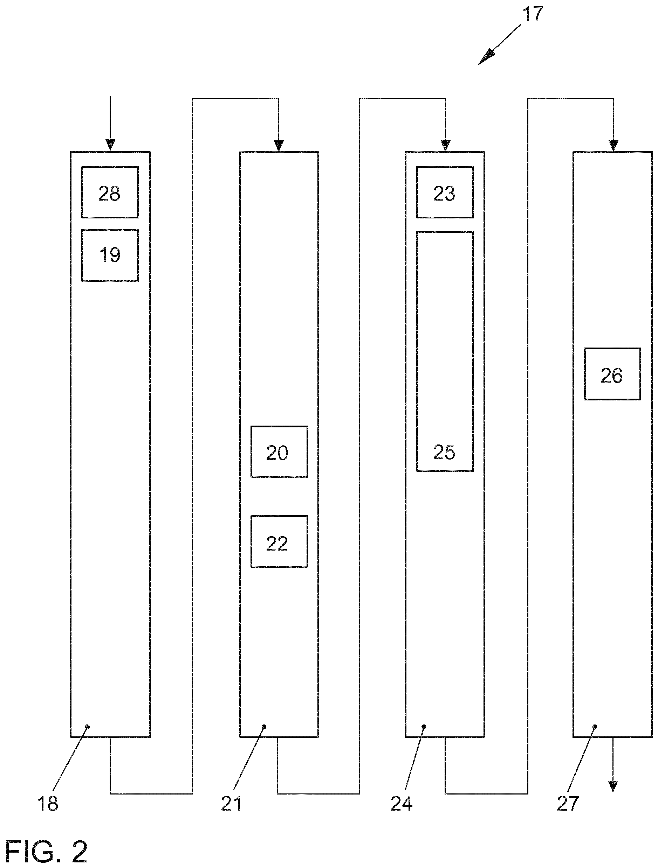

Figur 2 zeigt ein Ablaufschema einer Ausführungsform des erfindungsgemäßen Verfahrens 17 zum Betrieb einer Brennkraftmaschine 1 mit Selbstzündung 23. Zu Beginn des Ansaugtaktes 18 wird das Einlassventil 4 geöffnet 19, sodass Frischluft 5 in den Zylinder 2 strömen kann. Bei dem Verfahren 17 wird im Leerlauf der Brennkraftmaschine 1 der Anteil der Frischluft 5 gegenüber dem Kraftstoff 8 in dem Zylinder 2 reduziert. Dies erfolgt, indem das Schließen 20 des Einlassventils 4 später als in einem vom Leerlauf verschiedenen Betriebszustand der Brennkraftmaschine erfolgt. Diese Verschiebung des Schließens 20 des Einlassventils 4 nach spät hat zur Folge, dass sich das Schließen 20 des Einlassventils 4 erst während des Verdichtungstaktes 21, jedoch vor der Einspritzung 22 des Kraftstoffes 8 ereignet. Durch die Verdichtung wird das Gemisch aus Kraftstoff 8 und Frischluft 5 in dem Zylinder 2 erwärmt, bis eine Selbstzündung 23 erfolgt. Die Selbstzündung 23 findet am Ende des Verdichtungstaktes 21 oder am Anfang des Arbeitstaktes 24 statt. Während des Arbeitstaktes 24 wird der Kraftstoff 8 in dem Zylinder 2 verbrannt 25. Das Öffnen 26 des Auslassventils 10 erfolgt ebenfalls später als in einem vom Leerlauf verschiedenen Betriebszustand der Brennkraftmaschine. Das Auslassventil 10 wird erst während des Ausstoßtaktes 27 geöffnet 26. Das Auslassventil 10 wird zum Ende des Ausstoßtaktes 27 oder zu Beginn des Ansaugtaktes 18 geschlossen 28. Durch ein zusätzliches teilweises Anstellen der Drosselklappe 11 wird zusätzlich die Zufuhr der Frischluft 5 begrenzt.

### Bezugszeichenliste

| | | | |
|---|---|---|---|
| 1 | Brennkraftmaschine | 16 | Fahrerwunschgeber |
| 2 | Zylinder | 17 | Verfahren |
| 3 | Kolben | 18 | Ansaugtakt |
| 4 | Einlassventil | 19 | Öffnen des Einlassventils |
| 5 | Frischluft | 20 | Schließen des Einlassventils |
| 6 | Ansaugrohr | 21 | Verdichtungstakt |
| 7 | Einspritzdüse | 22 | Einspritzung |
| 8 | Kraftstoff | 23 | Selbstzündung |
| 9 | Steuergerät | 24 | Arbeitstakt |
| 10 | Auslassventil | 25 | Verbrennung |
| 11 | Drosselklappe | 26 | Öffnen des Auslassventils |
| 12 | Drosselklappensteller | 27 | Ausstoßtakt |
| 13 | Luftmassenmesser | 28 | Schließen des Auslassventils |
| 14 | Kurbelwelle | | |
| 15 | Sensor | | |

### Bezugszeichenliste

| | | | |
|---|---|---|---|
| 1 | Brennkraftmaschine | 16 | Fahrerwunschgeber |
| 2 | Zylinder | 17 | Verfahren |
| 3 | Kolben | 18 | Ansaugtakt |
| 4 | Einlassventil | 19 | Öffnen des Einlassventils |
| 5 | Frischluft | 20 | Schließen des Einlassventils |
| 6 | Ansaugrohr | 21 | Verdichtungstakt |
| 7 | Einspritzdüse | 22 | Einspritzung |
| 8 | Kraftstoff | 23 | Selbstzündung |
| 9 | Steuergerät | 24 | Arbeitstakt |
| 10 | Auslassventil | 25 | Verbrennung |
| 11 | Drosselklappe | 26 | Öffnen des Auslassventils |
| 12 | Drosselklappensteller | 27 | Ausstoßtakt |
| 13 | Luftmassenmesser | 28 | Schließen des Auslassventils |
| 14 | Kurbelwelle | | |
| 15 | Sensor | | |

## Patentansprüche

1. Verfahren zum Betrieb einer selbstzündenden (23) Brennkraftmaschine (1) mit wenigstens einem Brennraum, der wenigstens ein Einlassventil (4) aufweist, wobei der Betrieb zyklisch in Arbeitsspielen abläuft, die jeweils durch eine Abfolge von vier Takten, die ein Ansaugtakt, ein Verdichtungstakt, ein Arbeitstakt und ein Ausstoßtakt sind, sowie durch eine Drehung einer Kurbelwelle (14) der Brennkraftmaschine von 720° definiert sind, wobei das Verfahren folgende Schritte umfasst:
Betreiben der selbstzündenden (23) Brennkraftmaschine (1) in einem von einem Leerlauf verschiedenen Lastbetriebszustand, in welchem das wenigstens eine Einlassventil (4) zu einem ersten Schließzeitpunkt, der innerhalb eines ersten Arbeitsspiels liegt, geschlossen wird,
anschließend Betreiben der selbstzündenden (23) Brennkraftmaschine (1) in dem Leerlauf, in welchem das wenigstens eine Einlassventil (4) zu einem zweiten Schließzeitpunkt, der innerhalb eines zweiten Arbeitsspiels liegt, geschlossen wird, wobei der zweite Schließzeitpunkt später innerhalb des zweiten Arbeitsspiels als der erste Schließzeitpunkt innerhalb des ersten Arbeitsspiels liegt, indem der zweite Schließzeitpunkt innerhalb des zweiten Arbeitsspiels im Vergleich zu dem ersten Schließzeitpunkt innerhalb des ersten Arbeitsspiels um einen Drehwinkel der Kurbelwelle (14) in einem Bereich von 20° bis 60° nach spät verschoben ist,
**dadurch gekennzeichnet,**
**dass** der zweite Schließzeitpunkt während des Verdichtungstaktes (21) des zweiten Arbeitsspiels und vor der Einspritzung (22) des Kraftstoffes (8) während des zweiten Arbeitsspiels erfolgt.

2. Verfahren zum Betrieb einer Brennkraftmaschine (1) nach zumindest einem der vorangehenden Ansprüche,
**dadurch gekennzeichnet,**
**dass** der zweite Schließzeitpunkt innerhalb des zweiten Arbeitsspiels im Vergleich zu dem ersten Schließzeitpunkt innerhalb des ersten Arbeitsspiels um einen Drehwinkel der Kurbelwelle (14) um 50° nach spät verschoben ist.

3. Verfahren zum Betrieb einer Brennkraftmaschine (1) nach zumindest einem der vorangehenden Ansprüche,
**dadurch gekennzeichnet,**
**dass** ein Auslassventil (4) in dem Lastbetrieb zu einem ersten Öffnungszeitpunkt, der innerhalb des ersten Arbeitsspiels liegt, geöffnet wird, und in dem Leerlauf zu einem zweiten Öffnungszeitpunkt, der innerhalb des zweiten Arbeitsspiels liegt, geöffnet wird, wobei der zweite Öffnungszeitpunkt innerhalb des zweiten Arbeitsspiels im Vergleich zu dem ersten Öffnungszeitpunkt innerhalb des ersten Arbeitsspiels um einen Drehwinkel der Kurbelwelle (14) in einem Bereich von 20° bis 60°, vorzugsweise um 50° nach spät verschoben ist.

4. Verfahren zum Betrieb einer Brennkraftmaschine (1) nach zumindest einem der vorangehenden Ansprüche,
**dadurch gekennzeichnet,**
**dass** im Leerlauf eine Drosselklappe (11) der Brennkraftmaschine (1) teilweise geschlossen wird.

5. Verfahren zum Betrieb einer Brennkraftmaschine (1) nach zumindest einem der vorangehenden Ansprüche,
**dadurch gekennzeichnet,**
**dass** im Leerlauf ein Verbrennungsluftverhältnis von größer 2 eingestellt wird.

6. Brennkraftmaschine (1) mit Selbstzündung (23), umfassend ein Steuergerät (9), welches einen Speicher aufweist, in dem ein Steuerungsprogamm abgelegt ist, von welchem wenigstens ein Abschnitt beim Ausführen des Steuerungsprogramms den Leerlauf der Brennkraftmaschine (1) steuert,
**dadurch gekennzeichnet,**
**dass** das Steuerungsprogamm zur Anwendung des Verfahrens nach zumindest einem der vorangehenden Ansprüche vorgesehen ist.

## Claims

1. Method for operating a self-igniting (23) internal combustion engine (1) comprising at least one combustion chamber which has at least one inlet valve (4), the operation taking place cyclically in working cycles each defined by a sequence of four strokes, which are an intake stroke, a compression stroke, a combustion stroke and an exhaust stroke, and defined by a rotation of a crankshaft (14) of the internal combustion engine of 720°, the method comprising the following steps:
operating the self-igniting (23) internal combustion engine (1) in a load operating state, which is different from an idle mode, in which the at least one inlet valve (4) is closed at a first closing time which is within a first working cycle,
subsequently operating the self-igniting (23) internal combustion engine (1) in the idle mode, in which the at least one inlet valve (4) is closed at a second closing time which is within a second working cycle, the second closing time being later within the second working cycle than the first closing time is within the first working cycle, in that the second closing time within the second working cycle is shifted later by an angle of rotation of the crankshaft (14) in a range of 20° to 60°, in comparison with the first closing time within the first working cycle,
**characterized in that**
the second closing time occurs during the compression stroke (21) of the second working cycle and before the injection (22) of the fuel (8) during the second working cycle.

2. Method for operating an internal combustion engine (1) according to at least one of the preceding claims,
**characterized in that**
the second closing time within the second working cycle is shifted later by an angle of rotation of the crankshaft (14) of 50°, in comparison with the first closing time within the first working cycle.

3. Method for operating an internal combustion engine (1) according to at least one of the preceding claims,
**characterized in that**
an outlet valve (4) is opened in the load operating mode at a first opening time which is within the first working cycle, and is opened in the idle mode at a second opening time which is within the second working cycle, the second opening time within the second working cycle being shifted later by an angle of rotation of the crankshaft (14) in a range of 20° to 60°, preferably 50°, in comparison with the first opening time within the first working cycle.

4. Method for operating an internal combustion engine (1) according to at least one of the preceding claims,
**characterized in that**
in the idle mode, a throttle valve (11) of the internal combustion engine (1) is partially closed.

5. Method for operating an internal combustion engine (1) according to at least one of the preceding claims,
**characterized in that**
an air-fuel equivalence ratio of greater than 2 is set in the idle mode.

6. Internal combustion engine (1) with self-ignition (23), comprising a control unit (9) which has a memory in which a control program is stored, at least one portion of which controls the idle mode of the internal combustion engine (1) when the control program is executed,
**characterized in that**
the control program is provided for applying the method according to at least one of the preceding claims.

## Revendications

1. Procédé permettant de faire fonctionner un moteur à combustion interne (1) à auto-allumage (23) comportant au moins une chambre de combustion qui présente au moins une soupape d'admission (4), dans lequel le fonctionnement se déroule de manière cyclique en cycles de travail qui sont respectivement définis par une succession de quatre temps qui sont un temps d'admission, un temps de compression, un temps de détente et un temps d'échappement, ainsi que par une rotation de 720° d'un vilebrequin (14) du moteur à combustion interne, dans lequel le procédé comprend les étapes suivantes :
fonctionnement du moteur à combustion interne (1) à auto-allumage (23) dans un état de fonctionnement de charge différent du fonctionnement à vide dans lequel l'au moins une soupape d'admission (4) est fermée à un premier instant de fermeture qui se situe dans un premier cycle de travail,
ensuite, fonctionnement du moteur à combustion interne (1) à auto-allumage (23) à vide au cours duquel l'au moins une soupape d'admission (4) est fermée à un second instant de fermeture qui se situe dans un second cycle de travail, dans lequel le second instant de fermeture se situe plus tard dans le second cycle de travail que le premier instant de fermeture dans le premier cycle de travail par le fait que le second instant de fermeture dans le second cycle de travail est décalé plus tard d'un angle de rotation du vilebrequin (14) dans une plage allant de 20° à 60° par rapport au premier instant de fermeture dans le premier cycle de travail,
**caractérisé en ce**
**que** le second instant de fermeture a lieu pendant le temps de compression (21) du second cycle de travail et avant l'injection (22) du carburant (8) pendant le second cycle de travail.

2. Procédé permettant de faire fonctionner un moteur à combustion interne (1) selon au moins l'une des revendications précédentes,
**caractérisé en ce**
**que** le second instant de fermeture dans le second cycle de travail est décalé plus tard par rapport au premier instant de fermeture dans le premier cycle de travail d'un angle de rotation du vilebrequin (14) de 50°.

3. Procédé permettant de faire fonctionner un moteur à combustion interne (1) selon au moins l'une des revendications précédentes,
**caractérisé en ce**
**qu'**une soupape d'échappement (4) est ouverte dans le fonctionnement de charge à un premier instant d'ouverture qui se situe dans le premier cycle de travail, et est ouverte dans le fonctionnement à vide à un second instant d'ouverture qui se situe dans le second cycle de travail, dans lequel le second instant d'ouverture dans le second cycle de travail est décalé plus tard d'un angle de rotation du vilebrequin (14) dans une plage allant de 20° à 60°, de préférence de 50°, par rapport au premier instant d'ouverture dans le premier cycle de travail.

4. Procédé permettant de faire fonctionner un moteur à combustion interne (1) selon au moins l'une des revendications précédentes,
**caractérisé en ce**
**que,** lors du fonctionnement à vide, un papillon des gaz (11) du moteur à combustion interne (1) est partiellement fermé.

5. Procédé permettant de faire fonctionner un moteur à combustion interne (1) selon au moins l'une des revendications précédentes,
**caractérisé en ce**
**qu'**un rapport d'air de combustion supérieur à 2 est réglé lors du fonctionnement à vide.

6. Moteur à combustion interne (1) à auto-allumage (23), comprenant un appareil de commande (9) qui présente une mémoire dans laquelle est stocké un programme de commande dont au moins une section commande le fonctionnement à vide du moteur à combustion interne (1) lors de l'exécution du programme de commande,
**caractérisé en ce**
**que** le programme de commande est prévu pour la mise en œuvre du procédé selon au moins l'une des revendications précédentes.
